# EUROPEAN PATENT SPECIFICATION

(11) **EP 0 312 600 B1**
(45) Date of publication and mention of the grant of the patent: **06.10.1993**
(21) Application number: 88902240.6
(22) Date of filing: 07.03.1988
(51) Int. Cl.: A01K 63/00, A01K 75/00, E02B 1/00, B63B 59/04

(54) **FISHING MATERIALS EXCELLENT IN PREVENTION OF CLINGING OF ORGANISM AND PROCESSES FOR THEIR PRODUCTION**
MATERIAL FÜR DIE FISCHEREI, AUSGEZEICHNET ZUR VERHINDERUNG DES ANKLEBENS VON MIKROORGANISMEN,UND VERFAHREEN ZU DESSEN HERSTELLUNG
MATERIEL DE PECHE EXCELLENT POUR EMPECHER L'ADHESION D'ORGANISMES ET PROCEDES DE PRODUCTION DUDIT MATERIEL

(30) Priority: 30.04.1987 JP 107434/87; 18.09.1987 JP 235080/87
(43) Date of publication of application: 26.04.1989
(73) Proprietor: TORAY INDUSTRIES, INC., Tokyo 103 (JP)
(72) Inventor: IIJIMA, Hiromichi, Otsu-shi Shiga 520 (JP); YOSHIDA, Shusuke, Otsu-shi Shiga 520 (JP); WATANABE, Koji, Kusatsu-shi Shiga 525 (JP)
(74) Representative: Coleiro, Raymond
(86) International application number: JP8800240
(87) International publication number: WO8808246

(56) References cited:
- GB-A- 2 026 039
- PATENT ABSTRACTS OF JAPAN, vol. 6, no. 199 (M-162)[1077], 8th October 1982; & JP-A-57 104 492 (HIROMI KOGA) 29-06-1982

## Description

This invention relates to a material which is to be introduced into a marine environment (hereinafter "a marine material"), which material has fibres on its surface so as to prevent attachment to it of organisms such as shellfishes and algae and relates also to its method of manufacture.

The term "marine material" refers generally to materials related to fishing such as nets, ropes, buoys, markers, etc. and further to equipment associated with ships, hulls, and ports and harbours and materials concerned with water equipment and articles such as pipes, water distributing channels and ditches disposed in the sea, rivers, lakes and ports and harbours.

Recently, in coastal areas, aquaculture and cultivation fisheries have been rapidly developing, and with expansion of these fisheries, a number of problems have developed.

For example, the nets, ropes and other materials used in aquaculture and cultivation fisheries have many algae or shellfishes attached to their surface while they are submerged in water, resulting in a decrease of their operating efficiency. Moreover, there are problems of damage to, and loss of, materials due to tidal currents or waves.

To resolve such difficulties, various methods were proposed.

For example, previous proposals are a method of applying a copper plating onto the surface of the fishery material (Japanese Patent Laid Open No. TOKKAI-SHO 59-14738), a method of coating the surface of the fishery material with a water-swelling polymeric substance (Japanese Patent Laid Open No. TOKKAI-SHO 61-35735), a method of coating the surface of the fishery material with a mixture of moisture absorptive elastomer and copper (alloy) powder (Japanese Patent Laid Open No. TOKKAI-SHO 58-201862), a method of coating the surface of the fishery material with a diethanolamine derivative (Japanese Patent Laid Open No. TOKKAI-SHO 52-79024) and a method of coating an organic tin compound and zinc oxide (Japanese Patent Laid Open No. TOKKAI-SHO 54-157824) over the fishery material.

These prior methods are expected to have some effect in resolving the foregoing problems from the point of view of preventing attachment of algae and shellfishes to the surface of the marine material. However, the chemicals used in these prior methods include those producing a secondary pollution or having a toxicity on the human body. Further, when the marine material treated with these chemicals is submerged in water, it may also impede attachment of algae and shellfishes in the surrounding clean water area to induce the so-called "ISO-YAKI" and thus prevent a proper increase in the number of fishes and shellfishes and further induce generation of malformed fishes.

JP-A-57-104492 describes a method of preventing adhesion of oceanic life to the hull of a ship by pasting fur or resin mat below the draft line of the ship, with surface hair or plastic fibre arranged in the direction opposite to the bough, while GB-A-2026039 discloses the use of elongate fronds of flexible plastics material which can move against each other under the action of water currents.

It is the object of the present invention, in view of such problems, to provide a marine material having an effect of satisfactorily preventing attachment of algae and shellfishes and being substantially free from the problem of secondary pollution and its manufacturing method.

We have conducted extensive investigations for resolving the foregoing problems and have found the marine material of the present invention which would excellently prevent attachment of organisms.

According to the present invention, there is provided a marine material which is distinguished in preventing attachment of organisms thereto and is characterised in that it is covered by a number of fine pile fibres whose denier is 1 denier (1.1 dtex) or less, the pile length being from 0.5mm to 45mm inclusive and the pile density being at least 4000 fibres/cm² when the material is essentially planar and at least 4000 fibres/cm when the material is essentially linear.

Specifically, several methods are available for manufacturing the marine material of the invention.

In a first manufacturing method of preparing a marine material in accordance with claim 8 of the invention, a pile fabric of a desired width is first prepared, then at least either of the following treatment processes (a) and (b) is carried out to form a strip and then such a strip is used to produce a net or rope:
(a) applying twisting to the pile fabric of a desired width with the piled surface facing outwardly; and
(b) providing a cover of the pile fabric of a desired width over the surface of any other core material with the pile surface facing outwardly.

In a second preferred manufacturing method of preparing a marine material in accordance with the invention, the fine fibres are applied in the form of a flock onto the surface of a marine base material.

In a third preferred manufacturing method of preparing a marine material in accordance with the invention a yarn of a desired construction (hereinafter a "design yarn") having piles in the form of a bundle of the fine fibres is produced, then at least one such design yarn is doubled and twisted, as required, and then subjected to a net weaving or rope making process.

In the fourth preferred method a braided structure treatment is applied to a design yarn having piles in the form of a bundle of the fine fibres so that the design yarn forms a sheath and the yarn is used to form a rope having a core and a sheath.

The fifth preferred method comprises the following steps (c)-(e):
(c) mixing a number of the short fibres (these may be individual fibres) with a paint;
(d) applying the paint containing the short fibres onto the surface of a base material; and
(e) raising the fibres at the surface coated with the paint to form a pile.

The marine material of the foregoing composition according to the present invention which has a distinguished ability to prevent attachment of organisms suppresses generation of the secondary pollution which was the shortcoming of methods using chemicals conventionally employed for preventing attachment of organisms to marine materials and shows an excellent effect in preventing attachment of algae and shellfishes.

Accordingly, by construction fixed shore nets or culture nets for sea bream, young yellowtail, flatfish, tunafish, etc. which are to be installed in the sea over a long period of time from the marine material of the present invention, it is possible to prevent generation of malformed fish, damage to fish, pollution due to deposition of feeds from clogging of the net and death of fish from oxygen starvation.

In addition, by using the marine material of the present invention for the mooring ropes of ship or mooring ropes for culture tanks for algae and shellfishes, it is possible to enhance operability and prevent damage and loss due to tidal current and waves. Similar effects are also obtainable by using the marine material of the invention over the surface of buoys and markers and that of the frames of ocean platforms.

Further, it is possible to form the marine material of the present invention as an additional pile fabric to a conventional marine material and attach the pile fabric to that part of a ship which is submerged in water, namely the ship sides and bottom, and thus prevent attachment of organisms thereto, thereby reducing the repair expense of ships and reducing the rate at which the ships need to be serviced.

Similarly to the foregoing, by additionally providing a piled fabric of the present invention over piping and water channel equipment (water intake and drain ports) disposed in the sea, rivers, lakes and ports and harbours and also the piping and water channel equipment (water intake and drain ports) installed in factories, power plants and other plants and connected to the sea, rivers, lakes and ports and harbours, it is possible to effectively prevent attachment of organisms to such equipment and thus reduce the repair expense of the equipment.

In addition, according to the method of the present invention, a marine material of the invention which has a distinguished ability to prevent attachment of organisms can be produced with relative ease using available apparatus.

The present invention will now be described in more detail.

Heretofore, investigations associated with this technology were made mainly into the chemicals to be applied to or impregnated within the marine material. According to the invention, it was found, in the process of examining the marine material itself which was previously scarcely regarded as being important, that by making a polymer, whether it be hydrophilic or hydrophobic, into fine fibres and incorporating such fine fibres into the marine material in a particular structure, there could be obtained a novel effect of preventing attachment of organisms without specially imparting an antifouling chemical to the surface of the material.

It is said that the algae or shellfishes are generally well planted on relatively hard or scarcely swaying material, and such adhesion is dependant on the surface condition of the material to which they adhere. Thus, it is important to provide a surface condition to which the spores, zoospores or larval organisms of algae or shellfishes hardly attach or may attach but hardly take root.

For example, it is known that the sargasso, "wakame" seaweed or hairy algae have scarcely any shellfishes or other algae attached and growing on their surface. It is considered that the spores, zoospores or larval organisms may attach temporarily, but as the "wakame" seaweed, etc. is swayed by tidal current, waves, etc. and also on account of surface slime or secretion, they are unable to firmly attach and grow.

Based on such phenomena, we took note of the surface structure of the base material used for the marine material, and as the result of investigations, found that it would be effective to have fine piles having characteristics hereinafter defined present on the surface of the base material, that the hardness or softness of the piles would be dependent on the fibrous denier and starting material and that the property of the piles to sway by tidal current and waves would be governed by the length of the pile, the fibre denier and hydrophilic or hydrophobic property of the starting material. Thus, the marine material according to the present invention is covered wholly or at least partly by a number of piles of fine fibres of 1 denier (1.1 dtex) or less. A denier greater than 5 (5.5 dtex) is not preferable in that the fibres are stronger and therefore sway less in water and further produce an uneven surface attracting attachment of algae and shellfishes.

Piles of fibres covering the surface of the base material have some effect in reducing the attachment of algae and shellfishes. However, in order to have the effect of the invention exhibited more strongly, it is desirable to extend the length of the piles of fine fibres as described later. Nevertheless, in such case, as also described later, the pile length may be relatively short if the piles are composed of fibres of smaller denier. On the other hand, if the piles are composed of fibres of greater denier, a relatively long length of the piles is preferable.

Such pile length is to be determined in consideration of the place of application of the marine material of the invention, economy, workability and the extent of effect. In any event, the pile length is 0.5 mm or more and 45 mm or less.

A pile length less than 0.5 mm is not preferable in that the swaying motion by current and waves is hardly conveyed from place to place within the pile, thus attracting attachment of algae and shellfishes. On the other hand, if the pile length exceeds 45 mm, it induces various disadvantages including increasing difficulty in applying the piling technology and greater weight of the material and is not generally applicable.

As a result of various examinations we found that, if the organism attachment preventing effect, ease of production, economy and ease of handling are taken into account comprehensively, it is an advantageous and preferable method to use relatively fine fibres of 1 denier (1.1 dtex) or less, for the pile fibres and employ a relatively short length of pile. Specifically, a pile length of about 0.5-20mm for the pile fibres of 1 denier (1.1 dtex) or less is preferable.

While an appropriate range of the piling density of pile fibres is subject to change with the combination of the pile length and fibre denier, when the material of the present invention is in the form of a fabric, about 4000-6 million fibers/cm² is preferable, or when it is in the form of a rope or net, about 4000 to several hundred thousand fibers/cm is preferable, if the slimy effect of the material surface, avoidance, uneveness or swaying of piles is taken into consideration. However, so long as the intended effect of the invention is not impaired, a density outside the foregoing scope may be used.

Generally, for ease of the formation of fine fibre piles, it is most practical to employ a density within the range of ten to several hundred thousand fibers/cm². When a very fine fibre of 0.001 denier (0.0011 dtex) or less is used, it is possible to form piles of a superhigh density of about 5 to 6 million fibres/cm², as stated above, but when the ease of production is considered, densities up to about several hundred thousand fibres/cm² may be said to be practical.

According to the present invention, it is preferable that the piles of fine fibres have crimps. With the piles crimped, they have sea water readily infiltrated therebetween and thus have improved water retentivity to give slipperiness to the surface of the material and sensitively respond to the swaying action of the current and waves so that the spores of algae and shellfishes are scarcely attached or, when once attached, are readily removed.

For crimping, various methods are usable, and the form of crimp is not particularly limited. For example, the crimp may be in the form of a crimp mix produced by utilizing tie differential shrinkage of polymers, a three-dimensional crimp produced through the process of false twisting, or a two-dimensional crimp mechanically imparted by a crimper. In addition, a mixture of two-dimensional crimp and helical three-dimensional crimp or a mixture with straight piles having substantially no crimp is applicable.

For the polymer forming fine fibres used according to the present invention, all sorts of fibre forming polymers are usable, including polyesters such as poly(ethylene terephthalate) and copolymers thereof and poly(butylene terephthalate) and copolymers thereof, polyamides represented by nylon 6, 11, 12, 66 and 610 and copolymers thereof, acrylic polymers, polyurethane, poly(vinyl alcohol) and modified poly(vinyl alcohol), polyethylene, polypropylene and rayon. Fine fibres of these polymers or copolymers are used independently or in the form of a mixture or a complex.

The cross-sectional form of the fine fibres is not particularly limited, and a circular, deformed, hollow or core-sheath form is used, as appropriate.

The method of manufacturing the fine fibres is also not particularly limited, and any melt spinning method is adequately usable.

The marine material of the present invention may be coloured. Growth of algae is greatly governed by photosynthesis. Germination of the spores of algae and elongation of the germs vary greatly with the quantity and quality of light. In shallow water, the light is bright, comprised mainly of longer wave length in the red region, and as the depth increases, it becomes dark and changes to the green, blue and violet regions only, and so the living algae vary accordingly. For the algae to positively attach and live, a colour in the region of wave lengths suitable for photosynthesis is suitable. Thus, conversely, from the object of the present invention, a colour retarding attachment and living enhances the effect of the invention. From such a point of view, it is advantageous for enhancing the effect of the invention to choose a colour of the final marine material and piles which scarcely absorbs the light in the region of wave length suitable for photosynthesis of algae tending to attach in the waters where the material is used.

The marine material of the present invention may be used in the form of a rope-like material, net-like material, or fabric-like material.

The marine material of the present invention can be manufactured by adequately using various methods which are adapted for forming piles, and for the specific form of use such as rope, net or fabric, an optimum method is usable for manufacturing.

For example, in the case of a rope form, the marine material distinguished in preventing attachment of organisms according to the present invention may be obtained in the form of a rope by flocking the fine fibers on the surface of a twisted yarn in the form of a rope.

When a net form is desired, it is readily obtainable by applying a material of the present invention in the form of a rope, as stated above, onto a net-weaving machine. When a fabric form is desired, it can be produced by using the fine fibres for the pile yarn in a generally used double velvet loom.

A rope form is also obtainable by first manufacturing the material in the form of a fabric, then cutting the fabric minutely and processing the cut pieces into a strip.

Processing ultrafine fibres of 1.5 denier or less into piles involves so much more difficulties as the fibers become finer generally. In such case, a material covered by piles of ultrafine fibres is obtainable normally by using a subdividable complex fibre, producing piles of such fibre, then reducing the fineness further during processing.

Here, in the present invention, the subdividable complex fibre refers to any complex fibre using at least two or more component polymers and being divided, separated or having at least one component removed by a heat treatment, chemical treatment, physical treatment or any other adequate treatment for reducing the fineness to be transformed into ultra fine fibre. Such subdividable complex fibres may be, for example, mutually oriented polymer type fibers, dividable fibers, islands-in-a-sea type blend fibers and multi-layer type fibers. By using such a complex fibre as a pile forming fibre, it is possible to enhance the swaying property as well as the density of the piles, and so it is preferable to use a sub-dividable complex fibre as stated above.

Here, the typical five methods for manufacturing the marine material of the present invention will be described in more detail.

The first method of manufacturing the marine material according to the present invention which has a distinguished ability to prevent attachment of organisms is characterized by first preparing a piled fabric of a desired width having a number of piles of find fibers, applying at least either of the following processes (a) and (b) to form a strip, then using the strip thus obtained and processing it into a net or rope:
(a) applying twisting to the pile fabric of a desired width with the piled surface facing outwardly; and
(b) providing a covering of the pile fabric of a desired width over the surface of any other core material with the piled surface facing outwardly.

In this method, the piled fabric is a fabric having piles at least on either side of the fabric, and as such fabric, a warp pile fabric, weft pile fabric, chenille yarn fabric, flushed plain fabric, flushed non-woven fabric or electrically piled fabric is usable. The roots of the piles may be treated with a polymeric elastomer so that the piles will not slip off. The material forming the fabric base may be the same as the fibre material forming the piles or a separate material. As such fabric base, there may be used, for example, such fibre materials as knit fabric and non-woven fabric and any other materials in the form of a sheet such as a film of artificial resin.

In the first method stated above, such piled fabric is formed in a desired width. This desired width may be provided by forming the fabric in a tape of such width or forming a broader fabric and dividing the same into tapes, and the specific size of the width may be determined according to the purpose of use of, say, the net or rope and in consideration of the strength, thickness and flexibility of the product. The piled fabric of such desired width is then processed into a strip. For such a process, it is preferable to employ a method of applying twisting to the piled fabric of the desired width with the piled surface maintained so as to be outwardly facing or a method of using an adequate core material and covering the core material with the piled fabric of the desired width with the piled surface maintained so as to be outwardly facing or both methods concurrently. In the former method, the number of twists is not particularly limited and may be determined conditionally upon the density of the piles on the surface of the material. In the latter method, an adhesive may be used for covering, or the fabric may be shrunken by heat treatment. By using a strip obtained at least by either of these methods and subjecting it to net weaving or rope making, a marine material of the present invention is provided in the form of a net or rope.

The second method of manufacturing the marine material of the invention which has a distinguished ability to prevent attachment of organisms is characterized by flocking a number of fine fibers on the surface of the marine material. In this method, the marine material refers generally to nets, ropes, buoys, markers and other materials to be used in a marine environment, and further to equipment and materials of ships, hulls and ports and harbours and various water equipment and articles such as pipes, channels and drains disposed in the sea, rivers, lakes and ports and harbours, as previously stated. For flocking, it is preferable to use short fibres provided by cutting fine fibres to a desired length, the cut length being determined so that a pile length of 0.5 mm or more in the final product is obtained.

For flocking, electro-flocking is preferable in that the pile density can be enhanced, but the method is not limited in any way. For the adhesive used in the electro-flocking, an adequate one should be chosen for the raw material of the piled fibre and that of the marine material. In addition, a cross-linking agent may be incorporated in the adhesive to improve the adhesion between the marine material and the plushed fibre.

When a sub-dividable complex fibre is used for the fibre to be flocked, it is preferable to include, after flocking by, say, electro-flocking, a super-fining treatment suitable for the complex fibre used.

The third method of manufacturing the marine material having a distinguished ability to prevent attachment of organisms according to the present invention is characterized by producing a design yarn having piles in the form of a bundle of the fine fibers, then using one or more of such design yarns and doubling and twisting them, as required, and subjecting them to a net weaving or rope making process.

This method utilises a yarn bundle of an appropriate thickness of fine fibres or a yarn bundle having twisting further applied to it for the filling thread and a filament for the core yarn to prepare a design yarn such as chenille yarn by chenille processing, then using at least one more of such design yarns and doubling and twisting them, as required and subjecting them to a net-weaving or rope making process. In such a method, the core yarn may be spun with a melting fibre admixed for preventing slip-off of the filling thread. The core yarn is not limited to the filament, and a spun yarn is usable. By using one or more of such chenille or other design yarns and feeding them to, say, a non-knot net making machine which is adapted for simultaneous twisting and net weaving, a marine material in the form of a net of the present invention is obtainable, or by feeding to an appropriate rope making process after doubling of the yarns, a marine material in the form of a rope or the present invention is obtainable. Here, the number of yarns to be joined may be determined in consideration of the required thickness or practical strength of the final product.

When it is desired to produce a knot net, primary twisting is applied to one or more of the design yarns. The primary twisting may be made to provide any number of twists provided a kink is produced. Then, after joining at least two or more of such primarily twisted yarns, final twisting is carried out to form a strip. The final twisting may be made to provide any number of twists, provided there is no untwisting generated. Thereafter, by feeding to an adequate net or rope making process, a marine material of the invention is provided.

When a subdividable complex fibre or a fibre having a latent crimping ability is used for the filling thread of the design yarn, a rope or net of the present invention having a surface covered by piles of fine fibres is obtainable by applying a subdividing or crimp developing process in a step carried out before or after the chenille processing, rope making or net making.

As such a design yarn for the third method, any yarn having a pile structure is usable in addition to the chenille yarn referred to above. In the present invention, the design yarns having piles include the ordinary chenille yarn, fancy yarn, fluffed yarn and boucle yarn. Accordingly, the piles include loop piled pile, cut piled pile and mixtures of these. Thus, according to the present invention, the yarn structure having such a pile is important rather than the design effect, and based on such yarn structure, the intended effect is provided.

The fourth method of manufacturing the marine material having a distinguished ability to prevent attachment of organisms is characterized by processing a design yarn having piles of the fine fibres in the form of a bundle into a braid structure particularly having a sheath form and thus into a rope having a core and a sheath.

In this method, the braid structure is that formed into a rope by any conventional braiding machine, and according to the present invention, a braid structure substantially having a core and a sheath is employed. The braid composed of a core/sheath structure according to the present invention may or may not have any other base material inserted within it, and such insert, when present, should be made, as required, in consideration of the reinforcement, softness or weight of the rope.

The rope thus obtained may be used directly as a marine material of the invention in the form of a rope but may be subjected to a net weaving process into a net for use. The marine material obtainable by this method has the piles of the design yarn oriented in all directions on account of the braid structure and provides a better preventive effect against the attachment of organisms than that having a piled fabric with piles oriented in one direction processed into a rope or net.

The fifth method of manufacturing the marine material having a distinguished ability to prevent attachment of organisms comprises the following steps (c) - (e):
(c) mixing a number of short fibers as individual fibres with a paint;
(d) applying the paint containing the short fibers onto surface of a base material; and
(e) raising the fibres on the painted surface.

In this fifth method, short fibres having an appropriate length or a length suitable for obtaining a pile length of about 0.5 - 45 mm as stated above, that is, short fibres of a cut length of preferably about 1 - 50 mm, are blended in a paint for use. A cut length of 1 - 30 mm is particularly preferable in that the material surface is readily covered by piles by the piling treatment after the application. A cut length less than 1 mm scarcely provides piles even if the applied surface is subjected to buff grinding or piling treatment. Over 50 mm, the fibres are entangled with one another and are not homogeneously mixed with the paint. Further, the fibres are generally oriented parallel to the applied surface and are not effectively piled in the piling treatment. The fibres may be of a uniform cut length, or a mixture of fibers of different cut lengths may be used. Whichever method which is considered to be preferable should be chosen depending on the paint used, fibre material and fibre denier.

The paint used in this fifth method refers to those paints which are generally used for protection, rust-proofing, corrosion prevention and contamination prevention of the material surface or, more particularly, those paints which are applied to material surfaces having an interface with water, including, but not limited to, various resins such as epoxy, acrylic, polyurethane, silicone, phenolic, alkyd, vinyl chloride, chlorinated rubber, styrene butadiene, polyester, silicon, titanium and vinyl acetate and their mixtures. However, according to the present invention, a paint comprising a flexible and soft resin or resins is preferably used in view of the piling treatment after application, as stated later, and in this way, the effect of the invention is further enhanced.

The proportion of amount of short fibres mixed with paint is preferably 10-80 parts or, more preferably, 30-60 parts to 100 parts of the paint. With less than 10 parts, a piling treatment may be carried out after application, but hardly any piles are provided on the material surface, giving little effect of the invention, and with over 80 parts, the fibre component is excessive and is hardly applicable to the surface, and when applied, a film is scarcely formed or the film is of weak strength and is not practical.

The paint may be applied by submerging the material in it or spreading it onto the material surface by means of a brush, roller or by spraying, but any other suitable method is likewise usable.

After application, it is required to dry or solidify the paint resin, then treat the material surface for piling. As a method of this piling treatment, the material surface having the paint applied is ground by a sandpaper, sandcloth or file to scrape part of the paint resin off to bring the short fibres admixed in the paint out onto the material surface. When the material is a textile product, it is a preferable method to crease the material and thus bring the short fibres out onto the material surface.

The marine material of the present invention can be produced by any of the foregoing five typical methods, and the specific method should be chosen, as desired, depending on what form the marine material of the invention is to take.

In any of the foregoing five typical methods of the invention, if a subdividable complex fibre producing as fine fibres ultrafine fibres of 1 denier (1.1 dtex) or less is used, the subdividing treatment should be carried out at an appropriate stage between the process steps.

Further, in any of the foregoing five typical methods, if fibres having the potential to be crimped are used as the fine fibres, the crimp developing treatment should be rendered at an appropriate stage between the process steps.

The marine material of the present invention includes, in addition to those in the forms of rope and net as stated above, any other materials comprising all sorts of base material including cellular styrene, urethane foam, PVC sheet, cement, metal, ceramics, wood, etc. so long as their surfaces are covered with piles of a number of fine fibres conforming to the conditions of the present invention, and their forms and shapes are not particularly limited.

In particular, a method in which a fabric covered with a number of fine fibre piles conforming with the conditions of the invention is prepared and then applied appropriately over any existing marine material or equipment where the problem of attachment of algae or shellfishes arises provides one of the preferable forms of the marine material of the present invention. As such, buoys, markers, ship bottoms, pipes and water channels may be cited.

Further, the marine material of the present invention may have a conventional organism attachment preventive agent added in an appropriate amount. In addition, the fibres forming the piles may have an adequate organism attachment preventive agent applied or compressed into them, or particles or microcapsules each containing an adequate amount of the organism attachment preventive agent may be incorporated into a polymer which is then spun into fibres and used as piling fibres.

As described above, in the field of producing this type of marine material, there was no concept disclosed in the prior art of the technical application of piling the surface with fine fibres. However, by using fine fibres employed heretofore in the clothing industry and that of artificial leather as a component material of the marine material, a marine material is provided which has a distinguished ability to prevent attachment of organisms or algae and shellfishes.

The present invention will now be described with reference to examples.

### Examples 1 to 4 and Comparative Examples 1 to 4.

By using a warp and a weft of polyethylene terephthlate fibre whose denier and number of twists were 75 denier(D)(82.5dtex)-72 filaments(f) and 1,000 T/m, a plain weave whose warp and weft density were 120/inch(47.2/cm) and 100/inch(39.4/cm) was obtained. The plain weave was washed with hot water to remove the adhered oil. A polyethylene terephthalate fibre whose denier was 0.5 d(0.55dtex), 1.0 d(1.1dtex), 1.5 d(1.6dtex), or 4.2 d(4.62dtex) was flocked in a pile length of 0.5mm or 2 mm on the plain weave. Piled fabrics thus obtained (8 types), were cut into pieces 50 cm in length and 10 cm in width (Examples 1 to 6 Comparative Examples 1-2).

The 8 fabrics thus obtained as well as the fabrics of further Comparative Examples 5-8 prepared as described below were dyed as described below and tested for adherence to them of algae and shellfishes.

### Comparative Examples 5 to 8

4 types of high density plain weaves were prepared of warp and weft yarns of polyethyelene terephthalate whose monofilament denier was 0.5 d (0.55 dtex), 1.0 d (1.1 dtex), 1.5 d (1.65 dtex), or 3.0 d (3.3d). These fabrics were then washed with hot water to remove the adhered oil. These fabrics were cut into 50 cm in length and 10 cm in width (Comparative Examples 5 to 8).

These fabrics of Examples 1 to 4 and Comparative Examples 1 to 8 were dyed to a white color with a dispersed dye. These fabrics were stuck to acrylic plates, which were set on a stainless steel plate in parallel at definite intervals. This plate was thrown into the sea and lay at a depth of about 2 m and tests for adherence of algae and shellfishes were carried out on these fabrics. The results of observations made on the adherent states of algae and shellfishes on the surface of the 12 types of fabric after 3 months and 6months from immersion in the sea are shown in Table 1.

As seen from these results, adherence and growing of algae and shellfishes hardly occurred when fine fibrous piles existed. In particular, fibrous piles of ultrafine fibres with a comparative pile length exhibited distinguished effects and longer durability of the effect. Adherence of algae and shellfishes tended to increase if the denier became large and in this case, the longer the pile length, the higher the resistance to adhesion.

Moreover, based on the results after 3 months, in the latter half of the evaluating period for 3 months, fabrics prepared by flocking polyethylene terephthalate pile fibres whose monofilament deniers were 7 and 10 denier (7.7 and 11 dtex) and pile lengths were 0.5 and 2 mm in the plain weave used in Example 1 and cutting to the same size as those of the above described examples were tested for adherence of algae and shellfishes for 3 months. The results showed that much more adherence of algae and shellfishes occurred in comparison with the above described Example 1 and it was thereby confirmed that these were not preferable.

**Table 1**

| | Fibre denier (d) | Fibre dtex | Pile length (mm) | Adherent state of algae and shellfishes | |
|---|---|---|---|---|---|
| | | | | After 3 months | After 6 months |
| Examples 1 | 0.5 | 0.55 | 0.5 | Ⓞ | o |
| 2 | " | " | 2 | Ⓞ | Ⓞ |
| 3 | 1.0 | 1.1 | 0.5 | o | △ |
| 4 | " | " | 2 | Ⓞ | o |
| Comparative Examples 1 | 1.5 | 1.65 | 0.5 | o | △ |
| 2 | " | " | 2 | Ⓞ | o |
| 3 | 4.2 | 4.62 | 0.5 | o-△ | △-x |
| 4 | " | " | 2 | o | △ |
| 5 | 0.5* | 0.55* | - | x | xx |
| 6 | 1.0* | 1.1* | - | x | xx |
| 7 | 1.5* | 1.65* | - | x | x |
| 8 | 3.0* | 3.3* | - | x | x |

| | | | | | |
|---|---|---|---|---|---|
| * : Fibre denier in Comparative Examples 5 to 8 shows the denier of the fiber comprising warp and weft yarns of a plain weave. (Evaluation standard) Ⓞ : No adherence of algae and shellfishes o : Very little adherence of algae and shellfishes △ : A little adherence of algae and shellfishes x : Much adherence of algae and shellfishes xx: Very much adherence of algae and shellfishes | | | | | |

### Example 5

A velludo fabric prepared by using pile yarns of polyethylene terephthalate whose pile fibre denier and pile length were 0.5 d (0.55 dtex) and 3 mm was dyed to white or black colour with a dispersed dye. These fabrics were set on the stainless steel plate in the same manner as Examples 1 to 4 and submerged in the sea at a depth of about 2 m.

The adherent states of algae and shellfishes were observed after 3 months and 6 months from submerging in the sea and it was found that very little adherence occurred on the white fabric, but a little adherence of shellfishes occurred on the black fabric. However, a sufficient effect of the present invention was thereby recognized even though a little difference existed in accordance with colour.

### Example 6

By using the third method of the present invention as described above, a core yarn of polyethylene terephthalate of 500D (550 dtex)-48f and filling thread comprising 7 doubling yarns of ultra fine polyethylene terephthalate yarn of 60D (66 dtex)-144f were wed to prepare 2 chenille yarns wherein the density of the filling thread was 10/cm and the surface of the yarn was covered with piles whose pile lengths were 1 mm and 5 mm respectively and the color of the yarns was white. Two kinds of rope covered with piles were prepared by using these two chenille yarns and by doubling and twisting three of them. These ropes were then washed with hot water to remove the adhered oil and then dried.

These ropes were set on a stainless steel frame and submerged in the sea (the depth was about 3 m) and tests for adherence of algae and shellfishes were carried out, together with samples obtained as described in Comparative Example 9 below.

### Comparative Example 9

Three yarns of ultrafine fibres of 60D (66 dtex)-144f used in the above described Comparative Example 8 was simply made into doubling yarns and twisted to prepare a rope, which was then washed with hot water to remove the adhered oil and dried.

These ropes of the above described Example 6 and Comparative Example 9 were wound on a frame made of stainless steel bars at definite intervals and were thrown into the sea to lie at a depth of about 3 m.

After 3 months and 6 months from immersion in the sea, the adherent states of algae and shellfishes were observed. Much adherence of algae was observed on the rope prepared from twisted plain ultrafine fibres without any piles (Comparative Example 9), but on the rope whose pile length was 5 mm, the surface was stained to a light brown color and no adherence of algae and shellfishes was observed at all even after 6 months. Very little and a little adherences of algae were observed on the rope whose pile length was 1 mm after 3 months and 6 months respectively. From the results, the effect of the present invention was well recognized.

### Example 7

Four types of needle-punched non-woven fabrics made of polyethylene terephthalate and nylon whose monofilament deniers were 0.5 d (0.55 dtex) and 0.05 d (0.055 dtex) respectively were prepared. These non- woven fabrics were washed with hot water to remove the adhered oil and dried. One side of the non-woven fabric was pressed to provide a surface having unevenness but substantially with no pile and the other side was piled by using a needle fabric by hand to prepare a number of piles on the surface. These fabrics were set on a stainless steel frame and thrown into the sea (the depth was about 2 m) and tests for adherence of algae and shellfishes were carried out on these fabrics.

After 3 months and 6 months from immersion in the sea, the adherent states of algae and shellfishes were observed and it was found that much adherence of algae and shellfishes was observed after 3 months on the pressed surfaces independently of the kind of the base material and fibre denier, but, on the contrary, very little adherence of algae was observed on the piled surfaces where a number of piles were prepared by the piling treatment, regardless of the kind of fibre material for products having filaments of 0.5 denier (0.55 dtex). Such very little adherence of algae was observed on the part where pile formation was not well done due to non-uniformity of pile forming condition having been brought about by hand work. It was observed for the products using the filaments of 0.05 denier (0.055 dtex) that little adherence of algae occurred after 6 months from immersion in the sea.

It was found from these results that the method of the present invention covering the material surface with piles of fine fibres was effective.

### Examples 8-10 and Comparative Example 10

A drawn filament of 81d (89.1 dtex)-18f mixed spun in a spinning process with a ratio of 50/50 weight % of a mutually oriented polymeric type fibre whose island component/sea component was polyethylene terephthalate/ polystyrene, ratio of island component/sea component was 80/20 weight % and numbers of islands were 16 and another mutually oriented polymeric type fibre whose island component/sea component was copolymerized polyethylene terephthalate/polystyrene, ratio of island component/sea component was 80/20 weight % and numbers of islands were 16, was prepared. The denier of the island component in this filament was 0.23d (0.25 dtex).

The filaments were cut into 2.7 mm (Example 8) and 5.3 mm (Example 9) lengths by means of a guillotine cutter. Then, by using the above described second method of the present invention, each respective sample of the above described cut fibres was electrically flocked onto the surface of a commercially available fish-cultivating net (black colour, dope dyed PET 210d (231 dtex)/20f x 3 yarns) with a non-solvent-type adhesive under the same conditions.

Then, the nets were treated by dry heating at 180°C for 5 minutes and thereafter immersed in trichloroethylene to remove the sea component and to make ultrafine fibres and dried.

Each net thus obtained was a product whose surface was covered with ultrafine piles having fine crimps whose pile length and numbers of crimps were about 2 mm and 2 peaks/pile length (about 2 mm) and about 4 mm and 4 peaks/pile length (about 4 mm) respectively.

These nets were cut into 10 cm in width and 50 cm in length. These cut nets were set on a stainless steel frame and submerged and placed in the sea (about 2 m in depth).

A drawn filament of 81D (89.1 dtex)-18f comprising a mutually oriented polymeric type fibre whose island component/sea component was polyethylene terephthalate/polystyrene, ratio of island component/sea component was 80/20 weight % and numbers of islands were 16 was prepared. The denier of the island component in this filament was 0.23 d (0.25 dtex).

This filament was cut into 2 mm lengths by means of a guillotine cutter (Example 10). The cut filaments were then electrically flocked onto the surface of the same fish-cultivating net as that of Examples 8 and 9 under the same conditions. Then, the product was immersed in trichloroethylene to remove the sea component and to make ultrafine fibres and dried.

The net thus obtained was a product whose surface was covered with ultrafine piles having no crimps whose pile length was about 2 mm.

Three kinds of net of the above described Examples 8, 9, and 10 and the above described commercially available net (Comparative Example 10) were cut into 10 cm in width and 50 cm in length and the cut net was set on a stainless steel frame. This was submerged and placed in the sea (about 2 m in depth).

The results obtained by observing and evaluating the adherent state of algae and shellfishes on the net surface after 1 month, 4 months and 9 months from submerging in the sea are shown in Table 2.

As seen in Table 2, comparing with the conventional commercially available products, it was confirmed that the nets of the present invention have better effects for preventing algae and shellfishes from adherence in comparison with the commercially available fishing net. The samples whose piles consisted of crimped fine fibres exhibited a particularly excellent effect for durability of resistance to adherence. The sample of the present invention whose pile length was long exhibited much more remarkable effects.

**Table 2**

| | Crimp | Pile length (mm) | Adherent state of algae and shellfishes | | |
|---|---|---|---|---|---|
| | | | After 1 month | 4 months | 9 months |
| Example 8 | Yes | 2.0 | Ⓞ | Ⓞ | o |
| 9 | Yes | 4.0 | Ⓞ | Ⓞ | Ⓞ |
| 10 | No | 2.0 | Ⓞ | o | △ |
| Comparative Example 10 | No | -* | x | xx | xx |

| | | | | | |
|---|---|---|---|---|---|
| *: Comparative Example 10 was a commercially available fishing net having no piles. Evaluation standard of adherent state of algae and shellfishes was the same as Table 1. | | | | | |

### Example 11

A piled fabric whose ground warp density, ground weft density, piled fibre density and pile length were 91, 92 and 46/inch (18.1/cm) and 7mm respectively was prepared by means of a double velludo weaving machine by using a polyethylene terephthalate yarn of 75D (82.5 dtex)-36f as the ground warp, a polyethylene terephthalate yarn of 150D (16.5 dtex)-48f as the ground weft, and a yarn comprizing mutually-oriented polymeric type fibre of 75D (82.5 dtex)-18f whose island component/sea component was polyethylene terephthalate/polystyrene, ratio of island component/sea component was 80/20 weight % and numbers of islands were 16 as the pile fibre. Then, after dry heat treatment at 180°C was carried out on the piled fabric, the sea component was removed by using trichloroethylene to obtain a piled fabric having ultrafine piles of about 0.2 d (0.22 dtex).

The piled fabric was cut into 5 mm strips which, by means of the above described first method of the present invention, were then twisted under conditions such that the number of twists was counted, by means of a twist counter, as 50 T/m to provide S-twist and the piled part faced outwardly to prepare a cord-like material. Two of the cord-like materials were joined together to prepare a doubling yarn which was twisted with Z twist and the number of twists was 20 T/m.

Then, using the twisted yarn thus obtained, a net whose mesh was about 4 cm was prepared by hand.

The net thus obtained was a net whose surface was densely covered with ultrafine fibrous piles whose denier was about 0.2 d (0.22 dtex) and length was about 5.2 mm.

The net thus obtained was immersed in the sea and the state of adherence of algae and shellfishes on the net surface was observed and evaluated in accordance with the testing and evaluating method of Examples 8-10 after 1 month, 4 months and 9 months from immersion in the sea. It was thereby confirmed as described in Table 3 that a very good effect in preventing algae and shellfishes from adherence can be obtained.

### Example 12

By using a polyethylene terephthalate textured yarn of 50D (5.5 dtex)-24f as a ground warp and a back weft and a two folded yarn of a polyethylene terephthalate textured yarn of 75D (82.5 dtex)-72f whose numbers of twists were 400 T/m as a surface weft, a satin weave of double wefts and five pieces wherein the ground warp density, the back weft density and the surface weft density were 134, 82, and 82/inch respectively was prepared. Then, after dry heat treatment at 180°C on the fabric, an oil agent for piling was added and raising and piling treatment was carried out 15 times on the fabric by means of a needle raising machine.

The piled fabric thus obtained was cut into strips 5 mm in width by means of the above described first method of the present invention. Then a polyethylene terephthalate twisted yarn of 8,400D (9240 dtex) was used as a core yarn and the above descrived cut piled fabric was wound on it in such a way that the piles faced outwardly and no gap existed with a specified angle while being coated with an adhesive and thereafter dried. Then, washing with hot water was carried out to remove the oil agent.

A rope whose surface was densely covered with ultrafine fibrous piles whose denier was about 1 d (1.1 dtex) and length was about 2 mm was thus obtained.

The rope thus obtained was cut into strips 20 cm in length and immersed in the sea and the state of adherence of algae and shellfishes on the rope surface was observed and evaluated in accordance with the testing and evaluating method of Examples 8-10 after 1 month, 4 months and 9 months from immersion in the sea. It was thereby confirmed as described in Table 3 that a good effect in preventing algae and shellfishes from adherence can be obtained.

### Example 13

A rope-like material which was a marine material of the present invention was prepared in accordance with the above described fourth method of the present invention.

At first, a chenille yarn was prepared by using the below described core yarn and filling thread. The length and the density of the filling thread were 10 mm and 11/cm respectively.

The core yarn: a polyethylene terephthalate yarn of 500D-48f twisted with 400 T/m (Z direction).

The filling thread : a doubling yarn comprising seven polyethylene terephthalate yarns of 60D (66 dtex)-144f and twisted with 70 T/m (Z direction).

The chenille yarn obtained was used as a sheath part and nylon rope (12,600D) (13860 dtex) was used as a core part to prepare a rope-shaped material by means of braid manufacturing apparatus, it was then washed with hot water to remove the adhered oil agent and thereafter dried.

This rope-shaped material was covered by piles comprising ultrafine fibres whose monofilament denier and pile length were 0.42 d (0.46 dtex) and about 4.5 mm respectively, in all directions and angles.

This rope-shaped material was immersed in the sea in the same way as that of Example 14 and the state of adherence of algae and shellfishes on the rope surface was observed and evaluated after 1 month, 4 months and 9 months from immersion in the sea. It was thereby confirmed as described in Table 3 that a good effect in preventing algae and shellfishes from adherence can be obtained.

**Table 3**

| | Adherence state of algae and shellfishes | | |
|---|---|---|---|
| | After 1 month | After 4 months | After 9 months |
| Example 11 | Ⓞ | Ⓞ | o |
| 12 | Ⓞ | o | △ |
| 13 | Ⓞ | Ⓞ | o |

### Example 14

Ten yarns of a filament yarn of a mutually oriented polymeric type fibre of 75D (82.5 dtex)-36f whose island component was polyethylene terephthalate, sea component was polystyrene, ratio of island/sea component was 80/20 weight %, and number of islands was 16 were combined into a yarn, which was immersed in trichloroethylene to dissolve and remove the polystyrene sea component and thereafter dried. These ultrafine fibres, the monofilament denier of which was about 0.1d (0.11 dtex) were cut into 8 mm lengths by means of a guillotine cutter.

Then, the cut ultrafine short fibres were mixed with a polyurethane paint by means of a stirrer. In this case, the mixing ratio was 100 parts of the polyurethane paint and 60 parts of the cut short fibres.

This paint mixed with ultrafine fibres was painted onto the surface of an iron pipe by means of a brush and then dried. The painted surface was treated with a No. 100 sandpaper to make piles.

In the product thus obtained a part of the paint resin and the mixed short fibres were ground out and the surface of the iron pipe was covered with a number of fine fibrous piles whose length was 0.5 to 4 mm.

This iron pipe was thrown into the sea (about 2 mm in depth) for 3 months for testing the adherence to it of living organisms and it was found that no adherence of algae and shellfishes occurred and excellent resistance to algae and shellfishes adherence could therefore be obtained.

### Industrial Applicability

A marine material of the present invention having evcellent resistance to adherence of living things has a good effect on preventing algae and shellfishes from adherence and by utilizing this characteristic, it can be applied to various materials associated with fishery and the marine businesses such as nets, ropes, buoys and signals for a nautical line mark or a position mark.

Especially, remarkable effects can be exhibited by using it as a drift net or a cultivation net set in a definite position for a long time or a rope or a buoy used in conjunction with these nets.

Good effects on preventing living things from adherence can be also obtained by sticking fabric-shaped materials of the present invention onto immersed parts, such as the bottom, the side and so on of a ship in the sea, and the immersed parts of the supporting stand of marine platforms, and bridge piers.

It is also possible to prevent adherence of living things to those installations such as piping and water supplying equipment set in the sea, rivers, lakes, harbours and so on (intakes, drainage pipes and so on), piping and water supplying equipment being connected with the sea, rivers, lakes, harbours and so on in various plants such as factories and power plants (intakes, drainage pipes and so on) by laying the marine materials of the present invention on these installations by sticking them to such equipment.

## Claims

1. A material which is to be in a marine environment and having fibres on its surface to deter adhesion of marine organisms thereto characterized in that the material is covered with a number of piles of fine fibres whose denier is 1 denier (1.1dtex) or less, the pile length being from 0.5mm to 45mm inclusive and the pile density being at least 4000 fibres/cm² when the material is essentially planar and at least 4000 fibres/cm when the material is essentially linear.

2. A material according to claim 1, wherein the fine fibres have crimps.

3. A material according to claim 1 or 2, which is a rope-like material.

4. A material according to claim 1 or 2, which is a net-like material.

5. A material according to claim 1 or 2, which is a fabric-like material in which the fine fibres are adhered to a base of the material.

6. A material according to claim 3, wherein the rope-like material provides a braid texture having substantially a core part and a sheath part and at least the sheath part is of a yarn having piles comprising bundles of the fine fibres.

7. A material according to claim 1 or 2, having a painted layer on a surface of a base material, which painted layer is covered with the piles of fine fibres.

8. A method for preparing a material according to claim 1, in which method
(1) firstly, a piled fabric of an optional width having a number of piles of the fine fibres is prepared;
(2) a cord-like material is prepared from the piled fabric obtained in step (1); and
(3) finally, a net- or a rope-like material is prepared from the cord-like material obtained from step (2),
the step (2) being carried out by at least either of
(a) twisting the piled fabric obtained in step (1) in such a way that the piled surface of the fabric faces outwardly; or
(b) covering a core material with the piled fabric obtained in step (1) in such a way that the piled surface of the fabric faces outwardly.

9. A method for preparing a material according to claim 1, which method comprises flocking a number of the fine fibres of onto the surface of a base material.

10. A method for preparing a material according to claim 1, in which method, the following steps are carried out
(1) preparing a yarn having piles comprising bundles of the fine fibres,
(2) then optionally preparing a combined yarn or a twisted yarn from at least one of the yarns prepared in step (1) and
(3) finally preparing from the yarn prepared in step (1) or (2) a net or a rope.

11. A method according to claim 10, wherein the yarn prepared in step (1) has a chenille yarn structure.

12. A method for preparing a material according to claim 1, in which method a rope-like material having a core part and a sheath part is obtained by carrying out a braid texture manufacturing treatment in such a way that a yarn having piles comprising bundles of the fine fibres forms the sheath part.

13. A method for preparing a material according to claim 1, which method comprises the following steps:
(1) mixing a number of the short fibres in a paint.
(2) coating the surface of a base material with the paint in which the short fibres are mixed; and
(3) raising the fibres at the surface coated with the paint to form a pile.

14. A method according to any one of claims 8 to 13, in which composite fibres capable of producing ultrafine fibres of 1 denier (1.1 dtex) or less are employed, which method includes, at a suitable stage, treating the composite fibres in a manner such as to produce the ultrafine fibres.

15. A method according to any one of claims 8 to 13, which includes, at a suitable stage, producing crimped fine fibres.

## Patentansprüche

1. Material für eine Meeres-Umgebung, das Fasern an seiner Oberfläche aufweist, um Meeresorganismen davon abzuhalten, sich daran festzusetzen, dadurch gekennzeichnet, daß das Material mit einer Anzahl an Florschichten aus feinen Fasern bedeckt ist, deren Denier 1 Denier (1,1 dtex) oder weniger ist, wobei die Florlänge von 0,5 mm bis einschließlich 45 mm beträgt und die Flordichte zumindest 4000 Fasern/cm² beträgt, wenn das Material im wesentlichen planar ist und zumindest 4000 Fasern/cm, wenn das Material im wesentlichen linear ist.

2. Material nach Anspruch 1, worin die feinen Fasern Kräusel aufweisen.

3. Material nach Anspruch 1 oder 2, das ein seilartiges Material ist.

4. Material nach Anspruch 1 oder 2, das ein netzartiges Material ist.

5. Material nach Anspruch 1 oder 2, das ein gewebeartiges Material ist, bei dem die feinen Fasern an einer Basis des Materials haften.

6. Material nach Anspruch 3, worin das seilartige Material eine Umflechtungstextur aufweist, die im wesentlichen einen Kernteil und einen Hüllenteil umfaßt, und zumindest der Hüllenteil aus einem Garn besteht, das Florschichten aufweist, die Bündel aus den feinen Fasern enthalten.

7. Material nach Anspruch 1 oder 2, das eine aufgestrichene Schicht auf einer Oberfläche eines Basismaterials aufweist, wobei die aufgestrichene Schicht mit den Florschichten aus feinen Fasern bedeckt ist.

8. Verfahren zur Herstellung eines Materials nach Anspruch 1, bei welchem Verfahren
(1) erstens ein Florgewebe einer beliebigen Breite hergestellt wird, das eine Anzahl von Florschichten aus den feinen Fasern aufweist;
(2) aus dem in Schritt (1) erhaltenen Florgewebe ein kordartiges Material hergestellt wird; und
(3) schließlich aus dem in Schritt (2) erhaltenen kordartigen Material ein netz- oder seilartiges Material hergestellt wird,
wobei der Schritt (2) durchgeführt wird, indem zumindest entweder
(a) das in Schritt (1) erhaltene Florgewebe auf solche Weise verdrillt wird, daß die Floroberfläche des Gewebes nach außen gewandt ist; oder
(b) ein Kernmaterial mit dem in Schritt (1) erhaltenen Florgewebe auf solche Weise bedeckt wird, daß die Floroberfläche des Gewebes nach außen gewandt ist.

9. Verfahren zur Herstellung eines Materials nach Anspruch 1, welches Verfahren das Flocken einer Anzahl der feinen Fasern auf die Oberfläche eines Basismaterials umfaßt.

10. Verfahren zur Herstellung eines Materials nach Anspruch 1, bei welchem Verfahren die folgenden Schritte durchgeführt werden:
(1) Herstellung eines Garns, das Florschichten aufweist, die Bündel aus den feinen Fasern umfassen,
(2) dann wahlweise das Herstellen eines kombinierten Garns oder eines verdrillten Garns aus zumindest einem der in Schritt (1) hergestellten Garne und
(3) schließlich das Herstellen eines Netzes oder Seils aus dem in Schritt (1) oder (2) hergestellten Garn.

11. Verfahren nach Anspruch 10, worin das in Schritt (1) hergestellte Garn eine Chenillegarnstruktur aufweist.

12. Verfahren zur Herstellung eines Materials nach Anspruch 1, bei welchem Verfahren ein seilartiges Material mit einem Kernteil und einem Hüllenteil erhalten wird, indem eine Umflechtungstextur-Herstellungsbehandlung auf solche Art durchgeführt wird, daß ein Garn mit Florschichten, die Bündel aus den feinen Fasern enthalten, den Hüllenteil bildet.

13. Verfahren zur Herstellung eines Materials nach Anspruch 1, welches Verfahren die folgenden Schritte umfaßt:
(1) das Einmischen einer Anzahl der kurzen Fasern in ein Anstrichmittel;
(2) das Beschichten der Oberfläche eines Basismaterials mit dem Anstrichmittel, in das die kurzen Fasern eingemischt sind; und
(3) das Aufstellen der Fasern an der mit dem Anstrichmittel beschichteten Oberfläche, um einen Flor zu bilden.

14. Verfahren nach einem der Ansprüche 8 bis 13, bei welchem Verbundfasern eingesetzt werden, die fähig sind, ultrafeine Fasern mit 1 Denier (1,1 dtex) oder weniger zu erzeugen, welches Verfahren in einem geeigneten Stadium das Behandeln der Verbundfasern auf eine solche Weise umfaßt, daß die ultrafeinen Fasern erzeugt werden.

15. Verfahren nach einem der Ansprüche 8 bis 13, welches in einem geeigneten Stadium das Erzeugen gekräuselter feiner Fasern umfaßt.

## Revendications

1. Matériau qui doit se trouver dans un environnement marin et ayant des fibres à sa surface pour nuire à l'adhérence des organismes marins, caractérisé en ce que le matériau est couvert d'un certain nombre de poils de fibres fines dont le denier est de 1 denier (1,1 dtex) ou moins, la longueur des poils étant de 0,5 mm à 45 mm inclus et la densité des poils étant d'au moins 4.000 fibres/cm² quand le matériau est essentiellement plan et d'au moins 4.000 fibres/cm quand le matériau est essentiellement linéaire.

2. Matériau selon la revendication 1, où les fibres fines sont gaufrées.

3. Matériau selon la revendication 1 ou 2, qui est un matériau en forme de cordage.

4. Matériau selon la revendication 1 ou 2, qui est un matériau en forme de filet.

5. Matériau selon la revendication 1 ou 2, qui est un matériau en forme d'étoffe où les fibres fines adhèrent à une base du matériau.

6. Matériau selon la revendication 3, où le matériau en forme de cordage forme une texture tressé ayant sensiblement une partie d'âme et une partie de gaine et au moins la partie de gaine est d'un fil ayant des poils comprenant des faisceaux de fibres fines.

7. Matériau selon la revendication 1 ou 2, ayant une couche peinte sur une surface d'un matériau de base, laquelle couche peinte est couverte des poils des fibres fines.

8. Méthode de préparation d'un matériau selon la revendication 1, méthode dans laquelle
(1) d'abord, on prépare une étoffe à poils d'une largeur facultative ayant un certain nombre de poils des fibres fines ;
(2) on prépare un matériau en forme de corde à partir de l'étoffe à poils obtenue à l'étape (1) ; et
(3) enfin, on prépare un matériau en forme de filet ou de cordage à partir du matériau en forme de corde obtenu à l'étape (2),
l'étape (2) étant effectuée soit en
(a) tordant l'étoffe à poils obtenue à l'étape (1) de manière que la surface à poils de l'étoffe soit tournée vers l'extérieur ; ou
(b) couvrant un matériau de l'âme de l'étoffe à poils obtenue à l'étape (1) de manière que la surface des poils de l'étoffe soit tournée vers l'extérieur.

9. Méthode de préparation d'un matériau selon la revendication 1, laquelle méthode consiste à floquer un certain nombre de fibres fines sur la surface d'un matériau de base.

10. Méthode de préparation selon la revendication 1, méthode dans laquelle les étapes suivantes sont effectuées
(1) préparer un fil ayant des poils comprenant des faisceaux des fibres fines ;
(2) préparer alors facultativement un fil combiné ou un fil retors à partir d'au moins l'un des fils préparés à l'étape (1) et
(3) préparer enfin du fil préparé à l'étape (1) ou (2), un filet ou un cordage.

11. Méthode selon la revendication 10, où le fil préparé à l'etape (1) a une structure de fil chenille.

12. Méthode de préparation d'un matériau selon la revendication 1, méthode dans laquelle un matériau en forme de cordage ayant une partie d'âme et une partie de gaine est obtenu en effectuant un traitement de fabrication d'une texture tressée de manière qu'un fil ayant des poils comprenant des faisceaux de fibres fines forme la partie de gaine.

13. Méthode de préparation d'un matériau selon la revendication 1, laquelle méthode comprend les étapes suivantes :
(1) mélanger un certain nombre des fibres courtes dans une peinture ;
(2) enduire la surface d'un matériau de base par la peinture où sont mélangées les fibres courtes ; et
(3) relever les fibres à la surface enduite de la peinture pour former des poils.

14. Méthode selon l'une quelconque des revendications 8 à 13 où des fibres composites capables de produire des fibres ultrafines de 1 denier (1,1 dtex) ou moins, sont employées, laquelle méthode comprend, en un stade approprié, le traitement des fibres composites de façon à donner les fibres ultrafines.

15. Méthode selon l'une quelconque des revendications 8 à 13, qui comprend, en un stade approprié, la production des fibres fines gaufrées.
